# EUROPEAN PATENT APPLICATION

(11) **EP 2 849 523 A1**
(43) Date of publication of application: **18.03.2015**
(21) Application number: 13190898.0
(22) Date of filing: 30.10.2013
(51) Int. Cl.: H04W 72/12, H04W 88/06

(54) **Scheduling Method and Electronic Device using the same**

(30) Priority: 12.09.2013 US 201314024651
(71) Applicant: MediaTek Inc., Hsin-Chu (TW)
(72) Inventor: Lee, Yu-Ju, Tongxiao Township, Miaoli County (TW); Su, I-Feng, East Dist., Hsinchu City (TW); Huang, Hsu-Chu, Linyuan Dist., Kaohsiung City (TW)
(74) Representative: Hoefer & Partner

(57) **Abstract**

A scheduling method for an electronic device is disclosed. The electronic device comprises a first wireless module and a second wireless module for transmitting and receiving wireless signals of a first wireless communication system and a second wireless communication system respectively. The scheduling method comprises determining an arrival timing of specific frame periodically transmitted by a base station of the first wireless communication system; determining an interval covering the arrival timings of the specific frame; disabling the second wireless module during the interval for facilitating the first wireless module to hunt the specific frame; and enabling the second wireless module when the interval expires.

## Description

### Field of the Invention

The present invention is related to a scheduling method and an electronic device using the same, and more particularly, to a scheduling method and an electronic device for increasing a probability of receiving specific frames when two wireless connections coexist, in order to avoid specific frames lost.

### Background of the Invention

With the advancement of wireless communication technology, various wireless communication systems are developed, such as mobile communication systems (Global System for Mobile Communications, 3rd-Generation, Long Term Evolution, respectively named GSM, 3G, LTE hereinafter), wireless local area networks (Wireless Fidelity, Worldwide Interoperability for Microwave Access, named Wi-Fi, Wimax hereinafter), wireless personal local area networks (Bluetooth, ZigBee), etc. In order to prevent interferences among the communication systems, operating frequency bands and communication techniques, such as modulation, encoding, encryption, etc., employed by the communication systems are usually different. However, under the limited wireless communication resources, some of the communication systems have to share the same operating frequency band, leading to an interference issue.

For example, according to protocol specifications of Bluetooth and Wi-Fi, i.e. IEEE 802.15.1 and IEEE 802.11, the operating frequency bands thereof are defined around 2.4 GHz (5 GHz employed in IEEE 802.11a) within an industrial scientific medical (ISM) band. The ISM band is world-wide reserved for industrial, scientific and medical usages, and can be utilized without permission if some regulations are followed, to prevent affecting other frequency bands. In such a situation, even though the protocol specifications, modulating methods and encoding methods of Bluetooth and Wi-Fi are different, radio signals of Bluetooth and Wi-Fi may still cause interference to each other because of sharing the same operating frequency band, such that packets lost or frames lost may happen in both Bluetooth and Wi-Fi connections. If Bluetooth or Wi-Fi systems fail to receive packets or frames which include necessary information of wireless networks, the Bluetooth or Wi-Fi systems may suffer errors or even lose connections. For example, beacons are frames sent from an access point for carrying necessary information of a wireless network in a Wi-Fi system. If a station in the Wi-Fi system keeps losing or missing the beacons sequentially, the station may disconnect with the access point and lose Wi-Fi connection.

Bluetooth and Wi-Fi are taken for example since Bluetooth and Wi-Fi are usually employed in the same electronic product, such as a laptop computer, personal digital assistance (PDA), etc., such that disconnecting problem is obvious and crucial. Besides, since the ISM band can be utilized without permission, other communication systems using the ISM band may induce the same disconnecting problem. Therefore, it is a common goal in the industry to develop a scheduling method that keeps Wi-Fi and Bluetooth connections alive simultaneously and still maintain transmission quality of Wi-Fi and Bluetooth connections.

### Summary of the Invention

It is therefore a primary objective of the present invention to provide a scheduling method and an electronic device for increasing a probability of receiving the specific frames when two wireless connections coexist.

This is achieved by a scheduling method and an electronic device according to claims 1 and 10. The dependent claims pertain to corresponding further developments and improvements.

As will be seen more clearly from the following detailed description, the claimed scheduling method for an electronic device is disclosed herein. The scheduling method comprises a first wireless module and a second wireless module for transmitting and receiving wireless signals of a first wireless communication system and a second wireless communication system respectively. The scheduling method comprises determining an arrival timing of a specific frame periodically transmitted by a base station of the first wireless communication system; determining an interval covering the arrival timing of the specific frame; disabling the second wireless module during the interval for facilitating the first wireless module to hunt the specific frames; and enabling the second wireless module when the interval expires.

In another aspect of the invention, the claimed electronic device is disclosed in the detailed description here below. The electronic device comprises a first wireless module, for transmitting and receiving wireless signals of a first wireless communication system and determining an arrival timing of a specific frame periodically transmitted by a base station of the first wireless communication system; a second wireless module, for transmitting and receiving wireless signals of a second wireless communication system; and a scheduler, coupled to the first wireless module and the second wireless module, for determining an interval covering the arrival timing of the specific frame, disabling the second wireless module during the interval for facilitating the first wireless module to hunt the specific frame, and enabling the second wireless module when the interval expires.

### Brief Description of the Drawings

FIG. 1 is a schematic diagram of an electronic device according to an embodiment of the present invention.
FIG. 2 is a timing diagram of disabling a wireless module.
FIG. 3 is a timing diagram of synchronization between a wireless module and a base station.
FIG. 4 is a timing diagram of detailed operation of frame hunting.
FIG. 5A, 5B AND 5C are schematic diagrams of frame hunting processes of the electronic device of FIG. 1.
FIG. 6A, 6B AND 6C are schematic diagrams of frame hunting processes of the electronic device of FIG. 1.
FIG. 7A, 7B AND 7C are schematic diagrams of frame hunting processes of the electronic device of FIG. 1.
FIG. 8 is a timing diagram of packets lost in Bluetooth synchronous connection-oriented scenario.

### Detailed Description

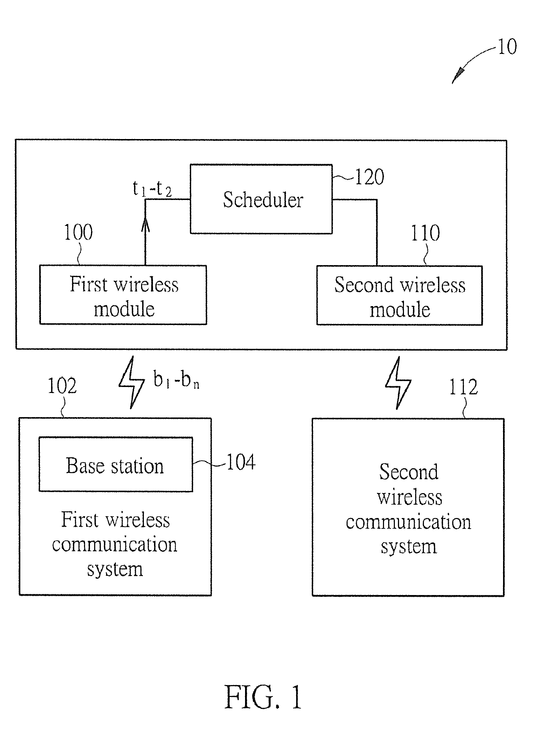

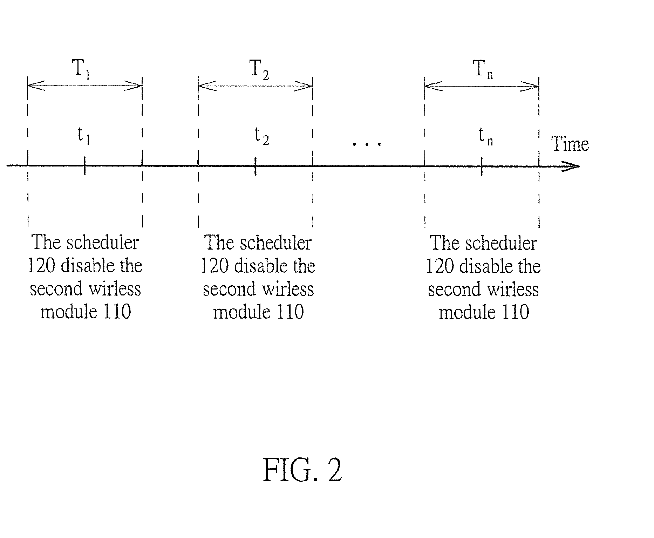

Please refer to FIG. 1, which is a schematic diagram of an electronic device 10 according to an embodiment of the present invention. The electronic device 10 supports wireless communications with a first wireless communication system 102 and a second wireless communication system 112. The first wireless communication system 102 and the second wireless communication system 112 share the same operating frequency band; for example, the first wireless communication system 102 may be a wireless local area network (WLAN) system, such as Wi-Fi, Wimax, etc., and the second wireless communication system 112 may be a Bluetooth system. The electronic device 10 comprises a first wireless module 100, a second wireless module 110, and a scheduler 120. The first wireless module 100 is utilized for transmitting and receiving wireless signals of the first wireless communication system 102 and determining arrival timings t₁-tₙ of specific frames b₁-bₙ periodically transmitted by a base station 104 of the first wireless communication system 102 and carrying necessary information of the first wireless communication system 102. The second wireless module 110 shares resources in time domain with the first wireless module 100, and is utilized for transmitting and receiving wireless signals of the second wireless communication system 112. The scheduler 120 is coupled to the first wireless module 100 and the second wireless module 120, and is utilized for controlling operations of the first wireless module 100 and the second wireless module 110. More specifically, as shown in FIG. 2, the scheduler 120 determines intervals T₁-Tₙ covering the arrival timings t₁-tₙ, disables the second wireless module 110 during the intervals T₁-Tₙ for facilitating the first wireless module 100 to hunt the specific frames b₁-bₙ, and enables the second wireless module 110 out of the intervals T₁-Tₙ.

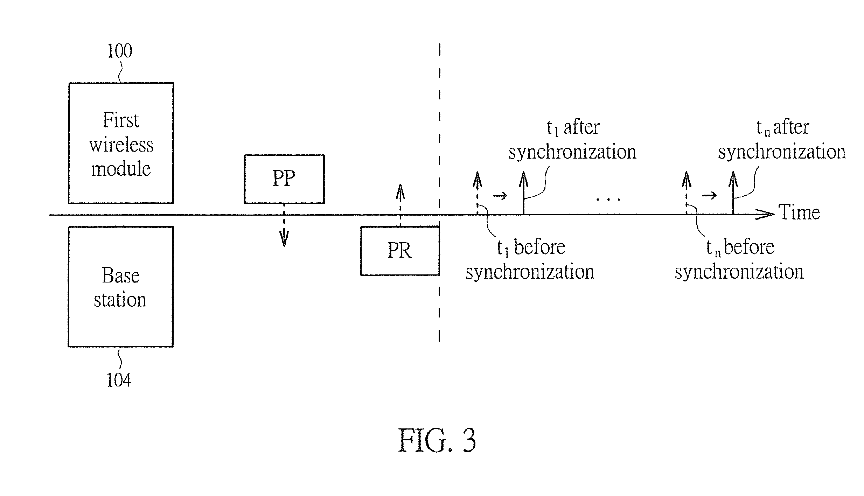

In detail, the first wireless module 100 may determine the arrival timings t₁-tₙ based on a timer 106 thereof. Since the timer 106 may not synchronize with the base station 104, the arrival timings t₁-tₙ may not accurate as well. As shown in FIG 3, to precisely determine the arrival timings t₁-tₙ, the first wireless module 100 transmits a synchronization request PP to the base station 104, and the base station 104 transmits a synchronization request response PR back to the first wireless module 100, such that the first wireless module 100 can adjust the timer 106 according to the synchronization request response PR. Therefore, the first wireless module 100 can adjust the arrival timings t₁-tₙ according to the timer 106 which has been updated.

More specifically, in a scenario that the first wireless module 100 and the second wireless module 110 connect to the first wireless communication system 102 and the second wireless communication system 112 respectively, the first wireless module 100 determines the arrival timings t₁-tₙ of the specific frames b₁-bₙ periodically transmitted by the base station 104 of the first wireless communication system 102 and expects to receive the specific frames b₁-bₙ at the arrival timings t₁-tₙ. The scheduler 120 sets a number N_{b} of intervals in which the first wireless module 100 does not receive the specific frames b₁-bₙ to be zero in the beginning. However, since the second wireless module 110 is exchanging radio signals with the second wireless communication system 112, the specific frames b₁-bₙ are interfered and thus the first wireless module 100 may fail to receive the specific frames b₁-bₙ. In such a situation, the scheduler 120 increases 1 to the number N_{b} if any of the specific frames b₁-bₙ is lost, and sets the number N_{b} to be zero if any of the specific frames b₁-bₙ is received.

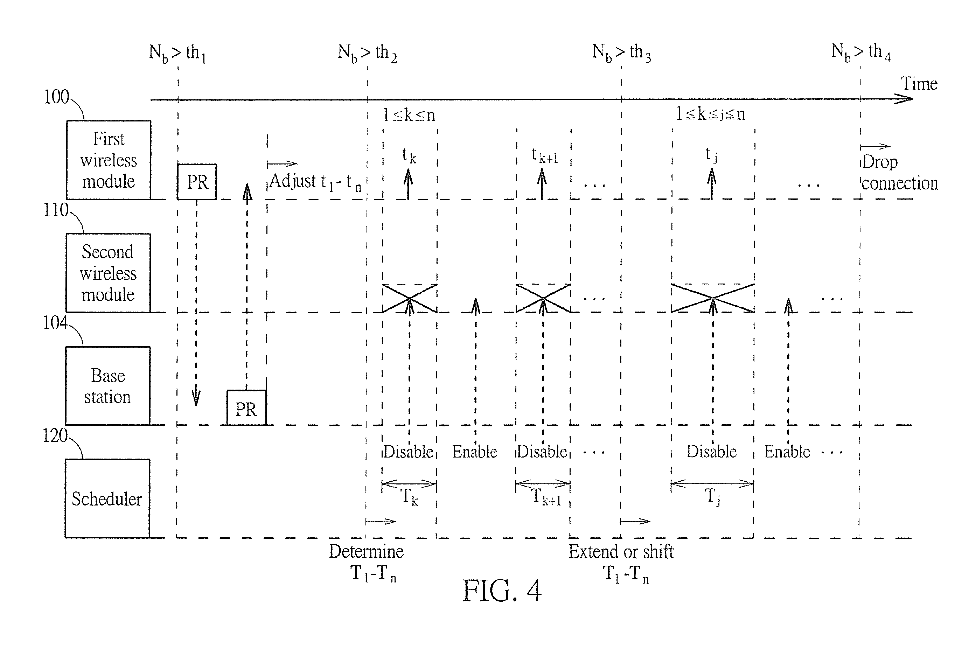

Further, as shown in FIG.4, when the number N_{b} is greater than a first threshold th₁, the first wireless module 100 transmits the synchronization request PP (e.g. a probe in Wi-Fi system) to the base station 104, and the base station 104 transmits the synchronization request response PR back to the first wireless module 100. Then, the first wireless module 100 adjusts the timer 106 according to the timestamp TS contained in the synchronization request response PR, and adjusts the arrival timings t₁-tₙ according to the timer 106, to increase a probability of receiving the specific frames b₁-bₙ. If any of the specific frames b₁-bₙ is still lost, the number N_{b} is continuously increased by the counter 130. When the number N_{b} is greater than a second threshold th₂, the scheduler 120 determines that the intervals T₁-Tₙ respectively covers the arrival timings t₁-tₙ, and disables the second wireless module 110 during the intervals T₁-Tₙ for reducing interference to the first wireless module 100, to increase the probability of receiving the specific frames b₁-bₙ. Also, the scheduler 120 enables the second wireless module 110 out of the intervals T₁-Tₙ. The scheduler 120 keep to increase the number N_{b} if any of the specific frames b₁-bₙ is lost continuously. When the number N_{b} is greater than a third threshold th₃, the scheduler 120 extends or shifts the intervals T₁-Tₙ respectively covering the arrival timings t₁-tₙ, and disables the second wireless module 110 during the intervals T₁-Tₙ for reducing interference to the first wireless module 100, to increase the probability of receiving the specific frames b₁-bₙ. If the specific frames b₁-bₙ still cannot be received by the first wireless module 100, the scheduler 120 keeps to increase the number N_{b}. When the number N_{b} is greater than a fourth threshold th₄, the electronic device 10 determines that network provided by the base station 104 is no longer available, and thus drops a connection between the first wireless module 100 and the base station 104.

The specific frames b₁-bₙ carry necessary information of the first wireless communication system 102, e.g. beacons for a Wi-Fi system. According to different protocols, necessary information of wireless network may be carried by sub-frames, transport blocks, packets or units of different protocols.

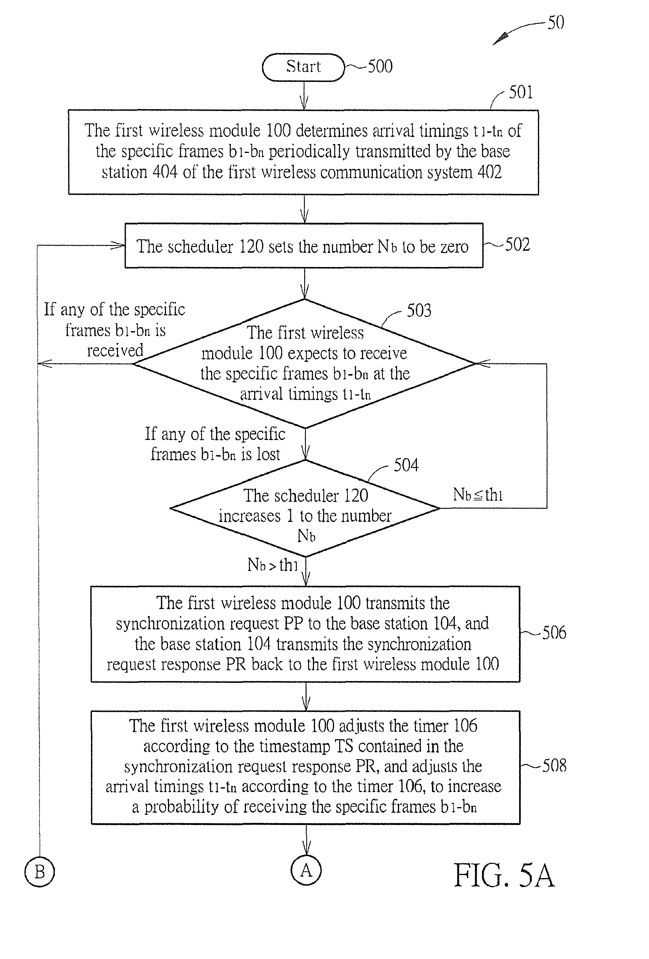

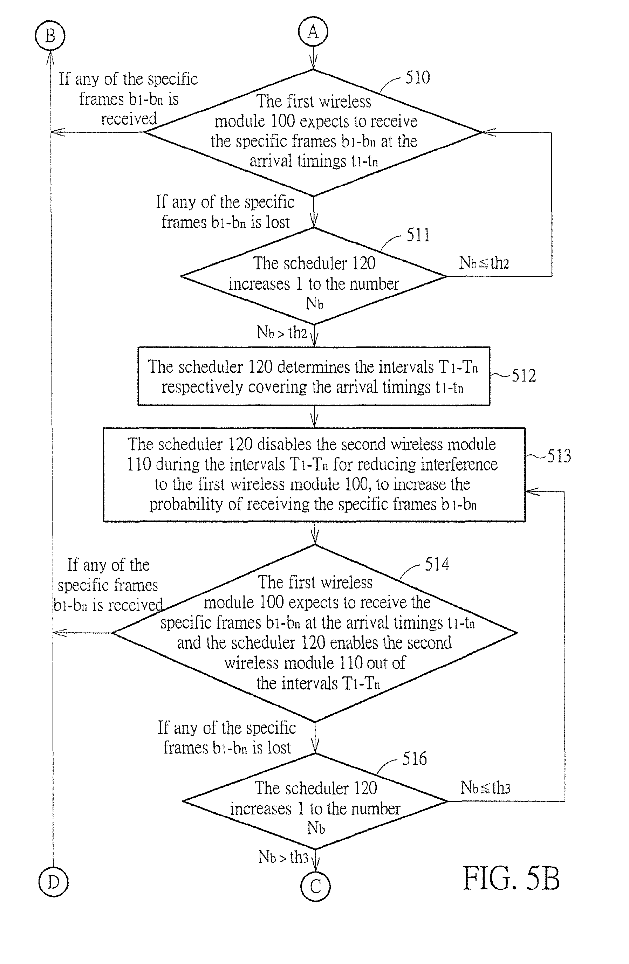

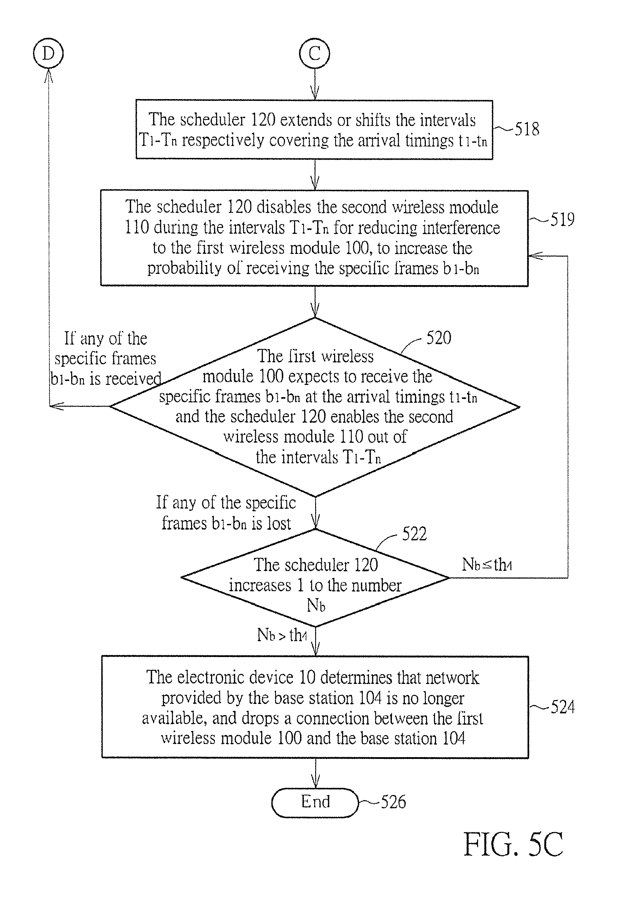

The operations of the electronic device 10 mentioned above can be summarized to a frame hunting process 50, as illustrated in FIG. 5A, 5B AND 5C. The frame hunting process 50 includes the following steps:

### Step 500: Start.

Step 501: The first wireless module 100 determines arrival timings t₁-tₙ of the specific frames b₁-bₙ periodically transmitted by the base station 404 of the first wireless communication system 402.

Step 502: The scheduler 120 sets the number N_{b} to be zero.

Step 503: The first wireless module 100 expects to receive the specific frames b₁-bₙ at the arrival timings t₁-tₙ. If any of the specific frames b₁-bₙ is lost, go to Step 504. If any of the specific frames b₁-bₙ is received, go to Step 502.

Step 504: The scheduler 120 increases 1 to the number N_{b}. If the number N_{b} is greater than the first threshold th₁, go to Step 506; otherwise, go to Step 503.

Step 506: The first wireless module 100 transmits the synchronization request PP to the base station 104, and the base station 104 transmits the synchronization request response PR back to the first wireless module 100.

Step 508: The first wireless module 100 adjusts the timer 106 according to the timestamp TS contained in the synchronization request response PR, and adjusts the arrival timings t₁-tₙ according to the timer 106, to increase a probability of receiving the specific frames b₁-bₙ.

Step 510: The first wireless module 100 expects to receive the specific frames b₁-bₙ at the arrival timings t₁-tₙ. If any of the specific frames b₁-bₙ is lost, go to Step 511. If any of the specific frames b₁-bₙ is received, go to Step 502.

Step 511: The scheduler 120 increases 1 to the number N_{b}. If the number N_{b} is greater than the second threshold th₂, go to Step 512; otherwise, go to Step 510.

Step 512: The scheduler 120 determines the intervals T₁-Tₙ respectively covering the arrival timings t₁-tₙ.

Step 513: The scheduler 120 disables the second wireless module 110 during the intervals T₁-Tₙ for reducing interference to the first wireless module 100, to increase the probability of receiving the specific frames b₁-bₙ.

Step 514: The first wireless module 100 expects to receive the specific frames b₁-bₙ at the arrival timings t₁-tₙ and the scheduler 120 enables the second wireless module 110 out of the intervals T₁-Tₙ. If any of the specific frames b₁-bₙ is lost, go to Step 516. If any of the specific frames b₁-bₙ is received, go to Step 502.

Step 516: The scheduler 120 increases 1 to the number N_{b}. If the number N_{b} is greater than the third threshold th₃, go to Step 518; otherwise, go to Step 513.

Step 518: The scheduler 120 extends or shifts the intervals T₁-Tₙ respectively covering the arrival timings t₁-tₙ.

Step 519: The scheduler 120 disables the second wireless module 110 during the intervals T₁-Tₙ for reducing interference to the first wireless module 100, to increase the probability of receiving the specific frames b₁-bₙ.

Step 520: The first wireless module 100 expects to receive the specific frames b₁-bₙ at the arrival timings t₁-tₙ and the scheduler 120 enables the second wireless module 110 out of the intervals T₁-Tₙ. If any of the specific frames b₁-bₙ is lost, go to Step 522. If any of the specific frames b₁-bₙ is received, go to Step 502.

Step 522: The scheduler 120 increases 1 to the number N_{b}. If the number N_{b} is greater than the third threshold th₃, go to Step 524; otherwise go to Step 519.

Step 524: The electronic device 10 determines that network provided by the base station 104 is no longer available, and drops a connection between the first wireless module 100 and the base station 104.

### Step 526: End.

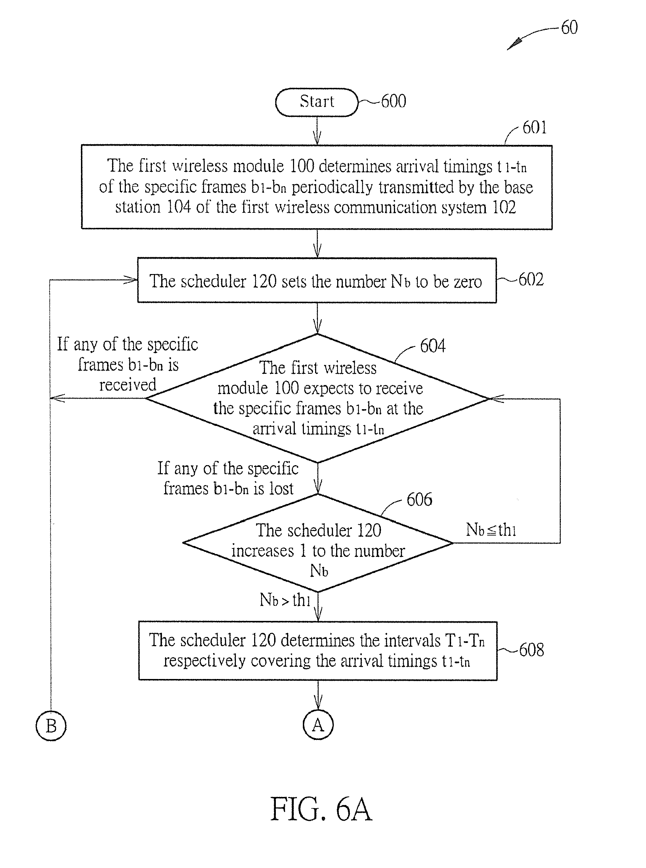

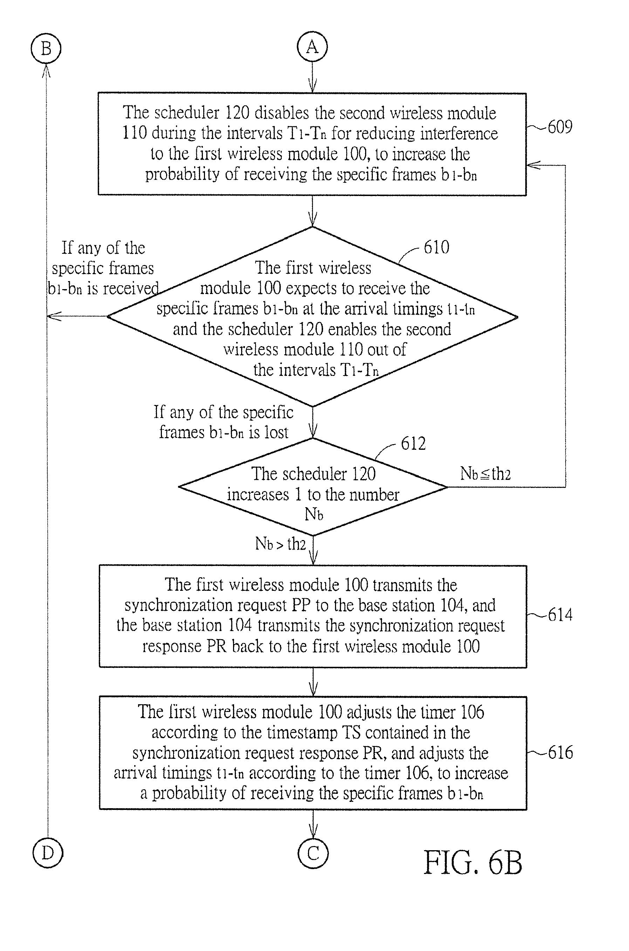

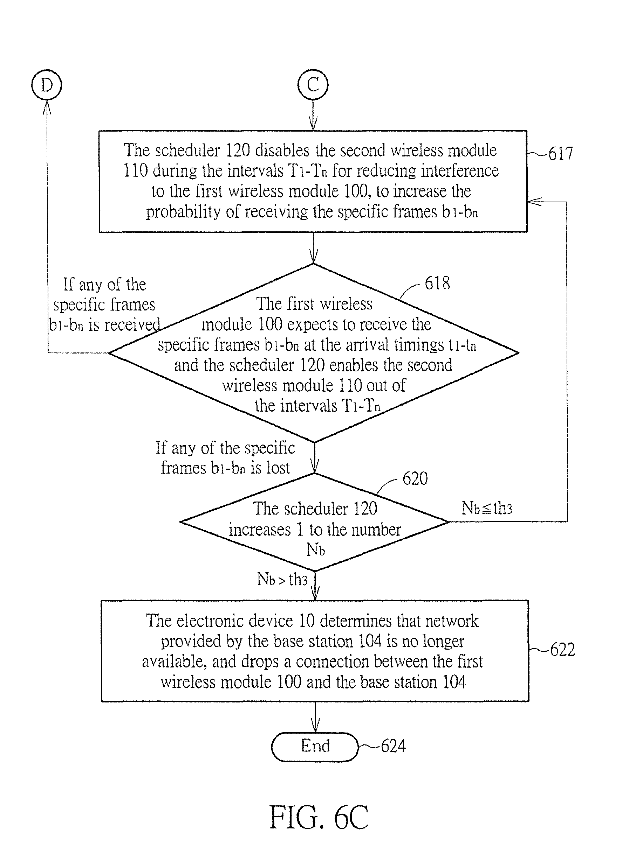

The frame hunting process 50 can be further divided into sub-processes 550, 560, 570. The sub-process 550 includes Step 503 to Step 508, the sub-process 560 includes Step 510 to Step 513, and the sub-process 570 includes Step 514 to Step 518. Any of the sub-processes 550, 560, 570 can be executed independently and an order of the sub-processes 550, 560, 570 in the process 50 can be reordered as well. Those skilled in the art can further recombine the sub-processes 550, 560, 570 to obtain a new process according to different requirements of systems. For example, please refer to FIG. 6A, 6B AND 6C. FIG. 6A, 6B AND 6C illustrates a frame hunting process 60, which includes the following steps:

### Step 600: Start.

Step 601: The first wireless module 100 determines arrival timings t₁-tₙ of the specific frames b₁-bₙ periodically transmitted by the base station 104 of the first wireless communication system 102.

Step 602: The scheduler 120 sets the number N_{b} to be zero.

Step 604: The first wireless module 100 expects to receive the specific frames b₁-bₙ at the arrival timings t₁-tₙ. If any of the specific frames b₁-bₙ is lost, go to Step 606. If any of the specific frames b₁-bₙ is received, go to Step 602.

Step 606: The scheduler 120 increases 1 to the number N_{b}. If the number N_{b} is greater than the first threshold th₁, go to Step 608; otherwise go to Step 604.

Step 608: The scheduler 120 determines the intervals T₁-Tₙ respectively covering the arrival timings t₁-tₙ.

Step 609: The scheduler 120 disables the second wireless module 110 during the intervals T₁-Tₙ for reducing interference to the first wireless module 100, to increase the probability of receiving the specific frames b₁-bₙ.

Step 610: The first wireless module 100 expects to receive the specific frames b₁-bₙ at the arrival timings t₁-tₙ and the scheduler 120 enables the second wireless module 110 out of the intervals T₁-Tₙ. If any of the specific frames b₁-bₙ is lost, go to Step 612. If any of the specific frames b₁-bₙ is received, go to Step 602.

Step 612: The scheduler 120 increases 1 to the number N_{b}. If the number N_{b} is greater than the second threshold th₂, go to Step 614; otherwise, go to Step 609.

Step 614: The first wireless module 100 transmits the synchronization request PP to the base station 104, and the base station 104 transmits the synchronization request response PR back to the first wireless module 100.

Step 616: The first wireless module 100 adjusts the timer 106 according to the timestamp TS contained in the synchronization request response PR, and adjusts the arrival timings t₁-tₙ according to the timer 106, to increase a probability of receiving the specific frames b₁-bₙ.

Step 617: The scheduler 120 disables the second wireless module 110 during the intervals T₁-Tₙ for reducing interference to the first wireless module 100, to increase the probability of receiving the specific frames b₁-bₙ.

Step 618: The first wireless module 100 expects to receive the specific frames b₁-bₙ at the arrival timings t₁-tₙ and the scheduler 120 enables the second wireless module 110 out of the intervals T₁-Tₙ. If any of the specific frames b₁-bₙ is lost, go to Step 620. If any of the specific frames b₁-bₙ is received, go to Step 602.

Step 620: The scheduler 120 increases 1 to the number N_{b}. If the number N_{b} is greater than the third threshold th₃, go to Step 622; otherwise go to Step 617.

Step 622: The electronic device 10 determines that network provided by the base station 104 is no longer available, and drops a connection between the first wireless module 100 and the base station 104.

### Step 624: End.

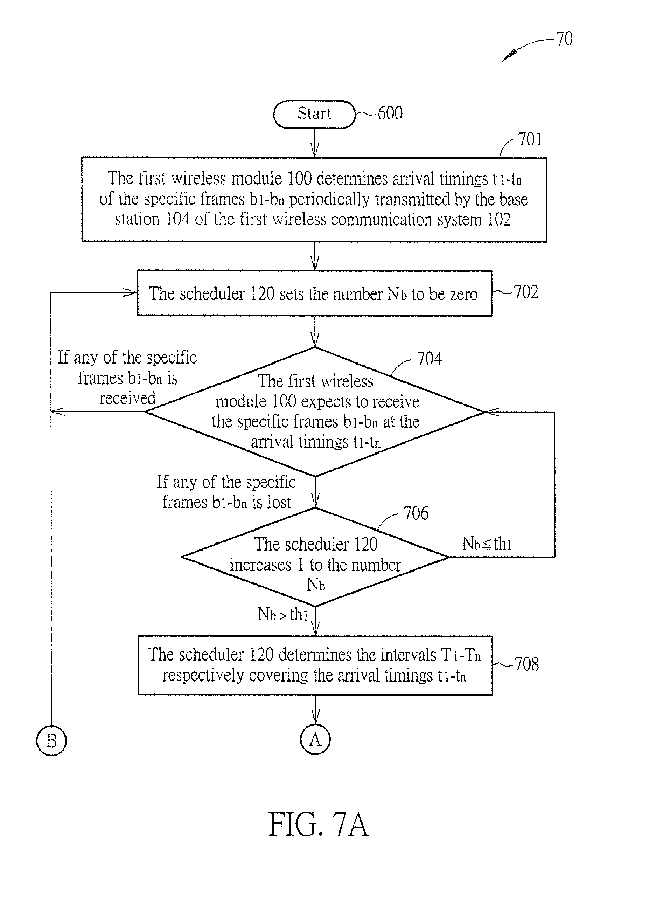

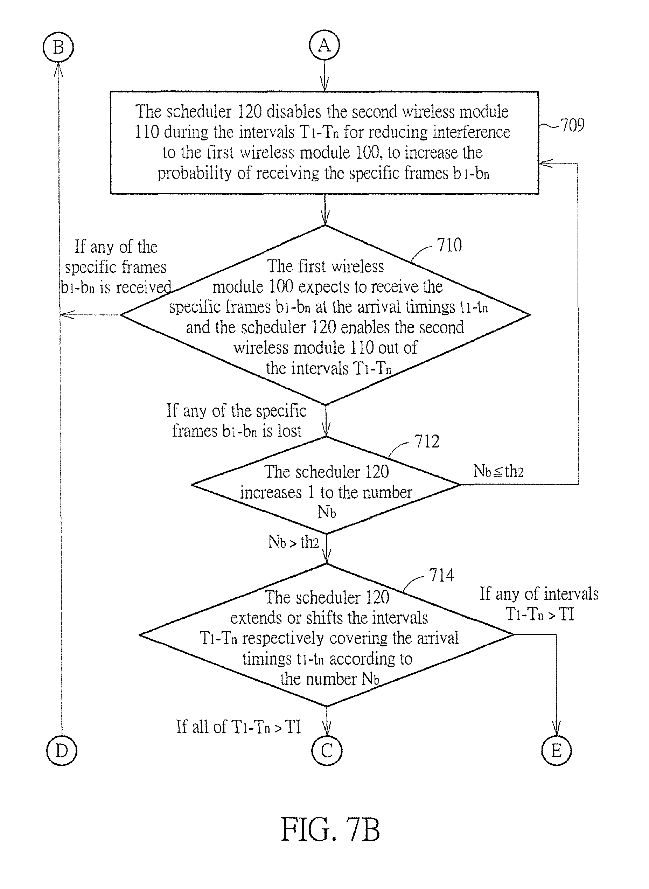

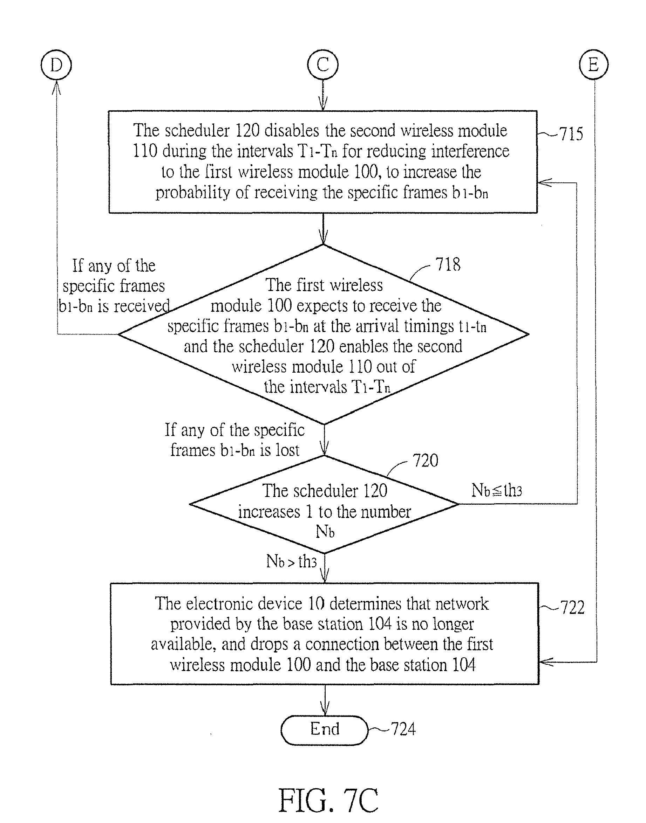

In addition, the sub-processes 550, 560, 570 of the frame hunting process 50 can be repeated to increase a probability of receiving the specific frames b₁-bₙ. For example, the intervals T₁-Tₙ can be extended more than one times until any of the specific frames b₁-bₙ is received (i.e. the intervals T₁-Tₙ become longer if the number N_{b} is increased but each of the intervals T₁-Tₙ is required to be shorter than a transmitting interval between two sequential specific frames among the specific frames b₁-bₙ. Please refer to FIG. 7A, 7B AND 7C. FIG. 7A, 7B AND 7C illustrates a frame hunting process 70, which includes the following steps:

### Step 700: Start.

Step 701: The first wireless module 100 determines arrival timings t₁-tₙ of the specific frames b₁-bₙ periodically transmitted by the base station 104 of the first wireless communication system 102.

Step 702: The scheduler 120 sets the number N_{b} to be zero.

Step 704: The first wireless module 100 expects to receive the specific frames b₁-bₙ at the arrival timings t₁-tₙ. If any of the specific frames b₁-bₙ is lost, go to Step 706. If any of the specific frames b₁-bₙ is received, go to Step 702.

Step 706: The scheduler 120 increases 1 to the number N_{b}. If the number N_{b} is greater than the first threshold th₁, go to Step 708; otherwise, go to Step 704.

Step 708: The scheduler 120 determines the intervals T₁-Tₙ respectively covering the arrival timings t₁-tₙ.

Step 709: The scheduler 120 disables the second wireless module 110 during the intervals T₁-Tₙ for reducing interference to the first wireless module 100, to increase the probability of receiving the specific frames b₁-bₙ.

Step 710: The first wireless module 100 expects to receive the specific frames b₁-bₙ at the arrival timings t₁-tₙ and the scheduler 120 enables the second wireless module 110 out of the intervals T₁-Tₙ. If any of the specific frames b₁-bₙ is lost, go to Step 712. If any of the specific frames b₁-bₙ is received, go to Step 702.

Step 712: The scheduler 120 increases 1 to the number N_{b}. If the number N_{b} is greater than the second threshold th₂, go to Step 714; otherwise, go to Step 709.

Step 714: The scheduler 120 extends or shifts the intervals T₁-Tₙ respectively covering the arrival timings t₁-tₙ according to the number N_{b}. If any of intervals T₁-Tₙ is longer than the transmitting interval TI between two sequential specific frames among the specific frames b₁-bₙ, go to Step 722; otherwise, go to Step 715.

Step 715: The scheduler 120 disables the second wireless module 110 during the intervals T₁-Tₙ for reducing interference to the first wireless module 100, to increase the probability of receiving the specific frames b₁-bₙ.

Step 718: The first wireless module 100 expects to receive the specific frames b₁-bₙ at the arrival timings t₁-tₙ and the scheduler 120 enables the second wireless module 110 out of the intervals T₁-Tₙ. If any of the specific frames b₁-bₙ is lost, go to Step 720. If any of the specific frames b₁-bₙ is received, go to Step 702.

Step 720: The scheduler 120 increases 1 to the number N_{b}. If the number N_{b} is greater than the third threshold th₃, go to Step 722; otherwise, go to Step 714.

Step 722: The electronic device 10 determines that network provided by the base station 104 is no longer available, and drops a connection between the first wireless module 100 and the base station 104.

### Step 724: End.

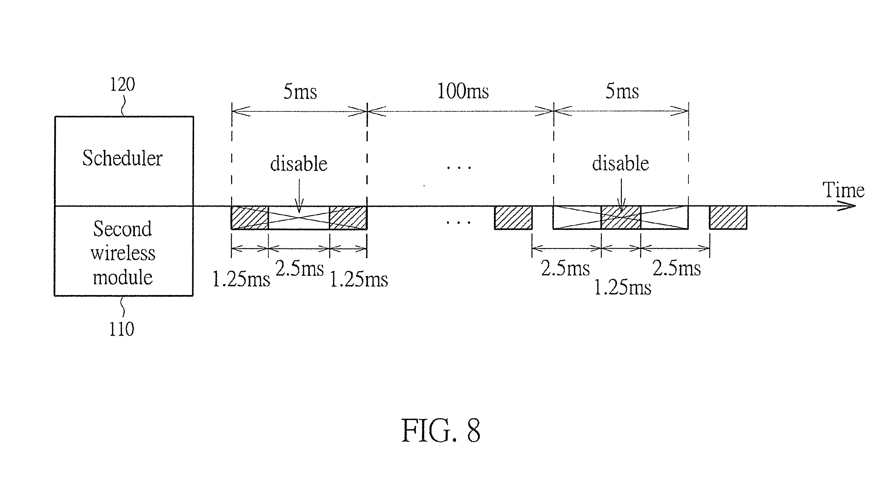

Noticeably, according to different wireless protocols used between the second wireless module 110 and the second wireless system 112, the second wireless module 110 may need to transmit packets to the second wireless system 112 periodically or in some specific times. Therefore, packets lost between the second wireless module 110 and the second wireless system 112 cannot avoid if the second wireless module 110 is disabled by the scheduler 120 and also a packet needs to be transmit by the second wireless module 110 within disabled interval. In such a situation, the scheduling method of the present invention can minimize packets lost of the second wireless module 110. For example, when the second wireless module 110 transmits packets to the second wireless communication system 112 through a Bluetooth synchronous connection-oriented (SCO) link, a SCO packet which transmission interval is 1.25ms needs to be transmitted by the second wireless module 110 every 3.25ms. In the same time, the first wireless modules 100 connects with the first wireless communication system 102 through a Wi-Fi connection, and the time slot and transmission time between two specific frames (e.g. beacons in Wi-Fi system) of Wi-Fi are 5ms and 100ms respectively. As shown in FIG. 8, the scheduler 120 can set the intervals T₁-Tₙ to be 5ms (the intervals T₁-Tₙ are required to be longer than 5ms to receive complete frames), to minimize a number of losing SCO packets. As can be seen in FIG. 8, at most two SCO packets are lost per 100ms, such that the Wi-Fi connection between the first wireless modules 100 connects with the first wireless communication system 102 can be maintained, and a packet-lost rate of the Bluetooth SCO link stays low as well.

In the prior art, when two wireless modules share the same frequency band, if one of the two wireless modules transmits radio signals without considering operation of another wireless module, disconnection of the another wireless module may occur. In comparison, according to the present invention, a wireless module is disabled during intervals of covering arrival timings of specific frames of another wireless module to avoid disconnection of the another wireless module.

To sum up, for two wireless modules sharing frequency band in an electronic device, the present invention can increase a probability of receiving specific frames when two wireless connections coexist, in order to avoid specific frames lost.

## Claims

1. A scheduling method for an electronic device (10) comprising a first wireless module (100) and a second wireless module (110) for transmitting and receiving wireless signals of a first wireless communication system (102) and a second wireless communication system (112) respectively, **characterized by** the scheduling method comprising:
determining an arrival timing (t₁-tₙ) of a specific frame (b₁-bₙ) periodically transmitted by a base station (104) of the first wireless communication system (102);
determining an interval (T₁-Tₙ) covering the arrival timing (t₁-tₙ) of the specific frame (b₁-bₙ);
disabling the second wireless module (110) during the interval (T₁-Tₙ) for facilitating the first wireless module (100) to hunt the specific frames (b₁-bₙ); and
enabling the second wireless module (110) when the interval (T₁-Tₙ) expires.

2. The scheduling method of claim 1, **characterized in that** the step of determining the arrival timing (t₁-tₙ) of the specific frame (b₁-bₙ) periodically transmitted by the base station (104) of the first wireless communication system (102) comprises:
synchronizing the first wireless module (100) with the base station (104) to adjust a timer (106) of the first wireless module (100); and
adjusting the arrival timing (t₁-tₙ) of the specific frame (b₁-bₙ) according to the timer (106).

3. The scheduling method of claim 2, **characterized in that** the step of synchronizing the first wireless module (100) with the base station (104) to adjust the timer (106) of the first wireless module (100) comprises:
transmitting a synchronization request (PP) to the base station (104) by the first wireless module (100);
receiving a synchronization request response (PR) from the base station (104) by the first wireless module (100); and
adjusting the timer (106) according to the synchronization request response (PR).

4. The scheduling method of claim 1, **characterized in that** the scheduling method further comprising:
dropping a connection between the first wireless module (100) and the base station (104) when a number (N_{b}) of intervals in which the first wireless module (100) does not receive specific frames (b₁-bₙ) within a predetermined duration is greater than a threshold (th₃, th₄).

5. The scheduling method of claim 1, **characterized in that** the scheduling method further comprising:
adjusting the interval (T₁-Tₙ) when the first wireless module (100) does not receive the specific frame (b₁-bₙ) within a predetermined duration of a number (N_{b}) of intervals that is greater than a threshold (th₂, th₃).

6. The scheduling method of claim 5, **characterized in that** the step of adjusting the interval (T₁-Tₙ) comprises:
extending or shifting the intervals (T₁-Tₙ) when the number (N_{b}) of intervals in which the first wireless module (100) does not receive specific frames (b₁-bₙ) within the predetermined duration is greater than the threshold (th₂, th₃).

7. The scheduling method of claim 6, **characterized in that** each of the intervals (T₁-Tₙ) is shorter than a transmitting interval between two sequential specific frames (b₁-bₙ).

8. The scheduling method of claim 1, **characterized in that** the first wireless communication system (102) is a wireless local area network system, or, the second wireless communication system (112) is a Bluetooth system.

9. An electronic device (10), **characterized by** the electronic device (10) comprising:
a first wireless module (100), for transmitting and receiving wireless signals of a first wireless communication system (102) and determining an arrival timing (t₁-tₙ) of a specific frame (b₁-bₙ) periodically transmitted by a base station (104) of the first wireless communication system (102);
a second wireless module (110), for transmitting and receiving wireless signals of a second wireless communication system (112); and
a scheduler (120), coupled to the first wireless module (100) and the second wireless module (110), for determining an interval (T₁-Tₙ) covering the arrival timing (t₁-tₙ) of the specific frame (b₁-bₙ), disabling the second wireless module (110) during the interval (T₁-Tₙ) for facilitating the first wireless module (100) to hunt the specific frame (b₁-bₙ), and enabling the second wireless module (110) when the interval (T₁-Tₙ) expires.

10. The electronic device (10) of claim 9, **characterized in that** the first wireless module (100) is further utilized for synchronizing the first wireless module (100) with the base station (104) to adjust a timer (106) of the first wireless module (100) and adjusting the arrival timing (t₁-tₙ) of the specific frames (b₁-bₙ) according to the timer (106).

11. The electronic device (10) of claim 10, **characterized in that** the first wireless module (100) is further utilized for transmitting a synchronization request (PP) to the base station (104), receiving a synchronization request response (PR) from the base station (104) by the first wireless module (100) and adjusting the timer (106) according to the synchronization request response (PR).

12. The electronic device (10) of claim 9, **characterized in that** the electronic device (10) drops a connection between the first wireless module (100) and the base station (104) when the first wireless module (100) does not receive the specific frame (b₁-bₙ) within a predetermined duration of a number (N_{b}) of intervals that is greater than a threshold (th₃, th₄).

13. The electronic device (10) of claim 9, **characterized in that** the scheduler (120) is further utilized for adjusting the intervals (T₁-Tₙ) when a number (N_{b}) of intervals in which the first wireless module (100) does not receive specific frames (b₁-bₙ) within a predetermined duration is greater than a threshold (th₂, th₃).

14. The electronic device (10) of claim 13, **characterized in that** the scheduler (120) adjusts the interval (T₁-Tₙ) by extending or shifting the interval (T₁-Tₙ) when the number (N_{b}) of intervals in which the first wireless module (100) does not receive specific frames (b₁-bₙ) within the predetermined duration is greater than the threshold (th₂, th₃).

15. The electronic device (10) of claim 14, **characterized in that** each of the interval (T₁-Tₙ) is shorter than a transmitting interval between two sequential specific frames (b₁-bₙ).

16. The electronic device (10) of claim 9, **characterized in that** the first wireless communication system (102) is a wireless local area network system, or the second wireless communication system (112) is a Bluetooth connection.
